# EUROPEAN PATENT APPLICATION

(11) **EP 2 819 019 A1**
(43) Date of publication of application: **31.12.2014**
(21) Application number: 14183388.9
(22) Date of filing: 21.06.2012
(51) Int. Cl.: G06F 11/34, G06F 13/38

(54) **Latency probe**

(30) Priority: 22.06.2011 US 201161500078 P; 20.06.2012 US 201213528780
(62) Divisional of application: 12741088.4
(71) Applicant: Qualcomm Technologies, Inc., San Diego, CA 92121-1714 (US)
(72) Inventor: Fawaz, Alain, San Diego, CA 92121-1714 (US); Boucard, Philippe, San Diego, CA 92121-1714 (US); Martin, Philippe, San Diego, CA 92121-1714 (US)
(74) Representative: Wegner, Hans

(57) **Abstract**

A probe within a Network-on-Chip (NoC) that can calculate a histogram of transaction data is disclosed. Some such histograms are cycles per number of pending transactions, transactions per latency, and transactions per request delay. The number of pending transactions can be measured by a register that is incremented at the start and decremented at the end of each transaction. Latencies can be measured by timers that are allocated and initialized at the start and read at the end of each transaction. Multiple counters can be used for multiple pending transactions. Multiple banks of counters can be used so that multiple transaction interfaces can complete transactions and perform histogram bin threshold comparisons simultaneously. The thresholds separating histogram bins can be programmable.

## Description

### CROSS-REFERENCE TO RELATED APPLICATIONS

This application claims priority to U.S. Provisional Application No. 61/500,078, filed June 22, 2011, entitled "Latency Probe," the entire contents of which are incorporated herein by reference.

### TECHNICAL FIELD

This disclosure is related generally to the field of network on chip interconnects for systems on chip.

### BACKGROUND

A network on chip (NoC) connects one or more intellectual property (IP) block initiator interfaces to one or more IP target interfaces. An example of an initiator IP is a central processing unit (CPU) and an example of a target IP is a memory controller. Initiators request read and write transactions from targets. The target gives responses (data for reads and in many systems acknowledgements for writes) to the transactions. The NoC transports requests and responses between initiators and targets. The time from which an initiator requests a transaction until it receives a response is usually multiple clock cycles. Often it is ten or more cycles and sometimes more than 100 cycles. It is possible, and in fact common, for an initiator to have more than one transaction pending simultaneously. Furthermore, if transactions are directed to different targets or if they access different data within a single target then responses may arrive at initiators out of order.

A NoC associates responses with their requests and therefore, at the interface to the initiator, stores some identification information. The amount of storage limits the number of simultaneously pending transactions that can be supported. If an initiator requests a transaction while the maximum supported number of pending transactions is pending then the NoC signals the initiator that it is not ready. In another case, if the target interface supports a smaller number of pending transactions than the initiator interface, the NoC signals the initiator that it is not ready. In a third case, if more than one initiator simultaneously make requests to the target then there is contention between the initiators for access. One initiator will have to wait. To that initiator the NoC will signal that it is not ready.

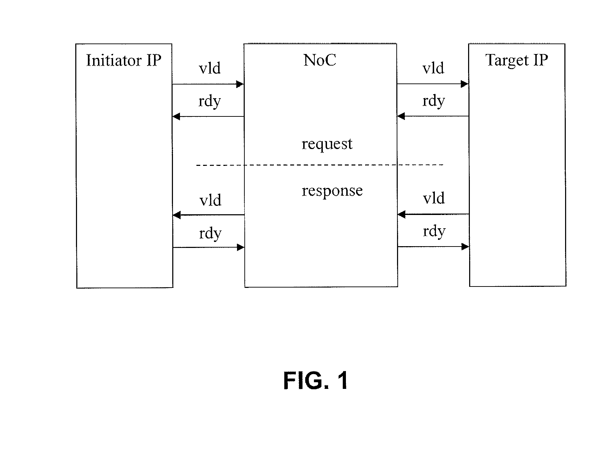

OCP and Advanced Microcontroller Bus Arcitecture (AMBA) Advanced Extensible Interface (AX1) are examples of widely used industry standard transaction interfaces. They use a handshake protocol with a valid (vld) sender signal and ready (rdy) receiver signal indicating a data transfer. As shown in FIG. 1, in the request direction vld is from initiator to NoC and NoC to target. In the response direction vld is from target to NoC and NoC to initiator. Vld is driven in the direction of data flow and rdy in the opposite direction.

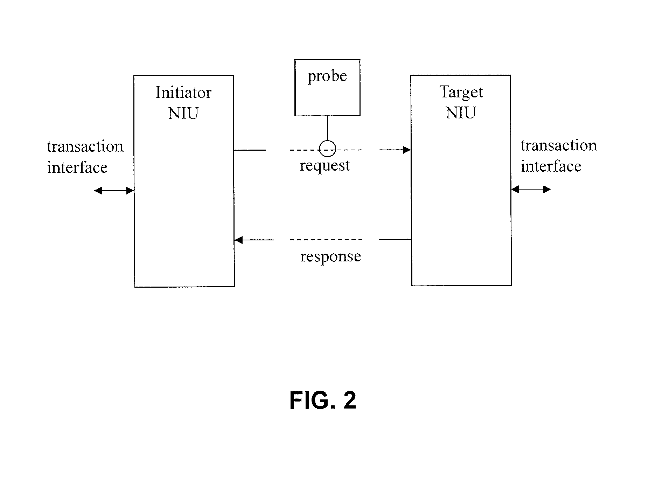

A NoC is, internally, a network. It is therefore necessary to generate one or more transport packets for each transaction request. As indicated in FIG. 2, this is performed in a network interface unit (NIU). It is common in the design of NoCs to include probes within the network. Probes gather useful data representing statistics about the performance of the system. One such statistic is a count of the number of transactions. Another statistic is the amount of data requested over a number of cycles, which can be used to calculate throughput within the network.

State of the art probes only gather statistics within the transport network topology. To optimize the performance of the system it is useful to know certain statistics about transactions that are only available within the NIU. Four are:

The time from initiator request vld for the first word of a transaction to NoC request rdy (the request acceptance latency);

The time from initiator request vld and NoC request rdy for the first word of a transaction to NoC response vld for the first word of the transaction (the response latency);

The time from initiator request vld for the first word of a transaction to NoC response valid for the last word of the transaction (total transaction latency); and

The number of pending transactions, which indicates the utilization of the NoC by the initiator.

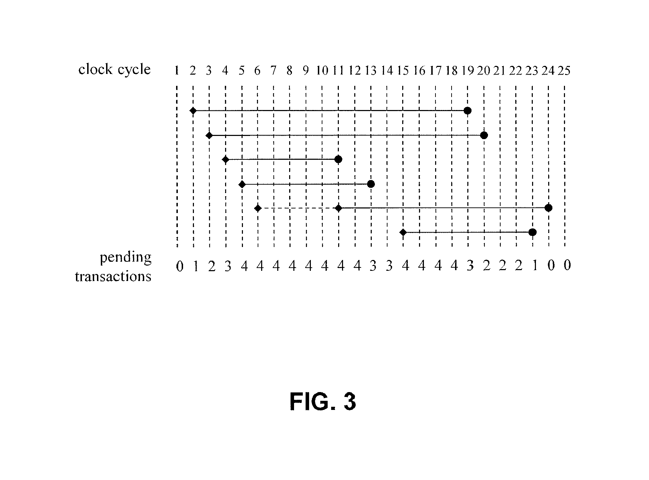

An example of the behavior an initiator NIU to multiple pending transactions is shown in FIG. 3. The NIU supports a maximum of four pending transactions. A transaction is requested by the initiator in each of clock cycles two through six. The fifth request is blocked (vld asserted by the initiator and rdy deasserted by the NoC) until a response is received for at least one pending transaction in cycle 11. A pending transaction receives a response in cycle 13 and a sixth transaction is requested in cycle 15. Pending transactions complete in cycles 11, 13, 19, 20, 23, and 24. The number of pending transactions in each cycle is shown at the bottom of the diagram.

The latency statistics for a single given transaction, or number of pending transactions for a single given clock cycle are not very interesting. However, the average over many transactions is useful, for example, to adjust the priority of requests from different initiators or to design the behavior of IPs in order to achieve certain design goals. A histogram of transactions per request acceptance latency, transactions per response latency, or clock cycles per number of pending transactions is even more useful for system performance optimization.

Simulations of the functions of an SoC are easily programmed to gather and report transaction statistics. However, simulations that accurately model the behavior of the SoC run slowly. Useful simulations are impractical during software development and impossible at run time.

### SUMMARY

The disclosed invention is a system, device and method to gather data about transactions in order to calculate statistics, particularly histograms of latencies and numbers of pending transaction.

The details of the disclosed implementations are set forth in the accompanying drawings and the description below. Other features, objects, and advantages will be apparent from the description and drawings, and from the claims.

### DESCRIPTION OF DRAWINGS

FIG. 1 illustrates an example system of an initiator, target, and NoC.
FIG. 2 illustrates an example NoC comprising an initiator NIU, a target NIU, and a probe.
FIG. 3 illustrates a timeline of transactions pending at an initiator transaction interface.

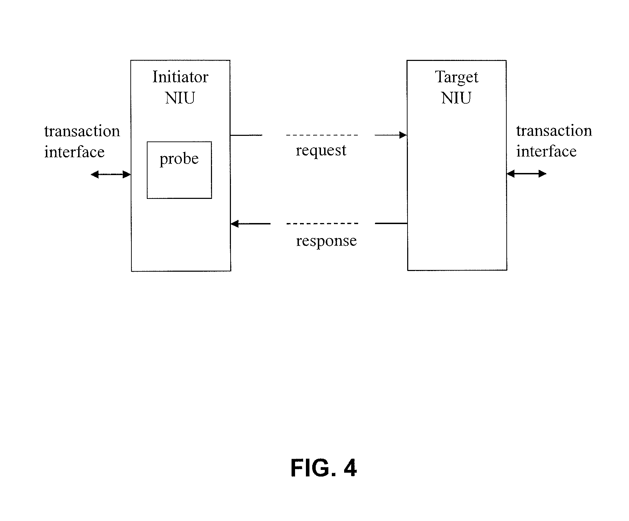

FIG. 4 illustrates an example NoC comprising an initiator NIU, a target NIU, and a transaction probe within the initiator NIU.
FIG. 5 illustrates example logic for threshold comparison and incrementing of histogram bins.
FIG. 6 illustrates example logic to monitor the number of pending transactions and trigger incrementing of a histogram bin.
FIG. 7 illustrates example logic to monitor transaction latency and trigger incrementing of a histogram bin.

The same reference symbol used in various drawings indicates like elements.

### DETAILED DESCRIPTION

A probe within an initiator interface of a NoC, for gathering transaction statistics data is disclosed. The probe provides a set of registers containing count values, each of which corresponds to a bin of a histogram. The bin count statistics can be used during system performance analysis, software debug, and real-time operation.

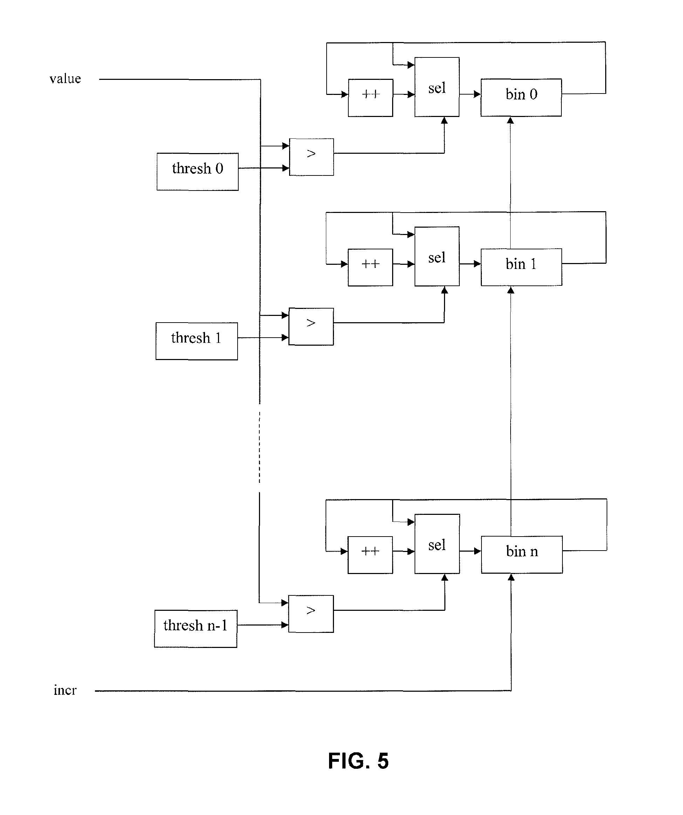

Referring to FIG. 5, a value is compared to threshold value 0, threshold value 1, and so forth to threshold n-1 each corresponding to a bin for a number of n bins. The result of each comparison selects between a current or an incremented (++) value of each bin. The bin counter registers the input value whenever the incr signal is pulsed.

In some implementations, the value of thresholds between bins is reprogrammable under software control. This provides for different scopes and different ranges of data in different use cases. For example, transactions to a fast target might typically received responses within ten cycles whereas transactions to a slow target might typically take 100 to 200 cycles to receive a response. In the first case, histogram bins represent transactions over latency would be separated by thresholds in the 1 to 10 cycle whereas in the second case the same bin count registers could be used by with thresholds in the 100 to 200 cycle range.

In some implementations, the type of histogram data to be gathered in each bin can be reprogrammed under software control. More than one kind of statistics can be gathered simultaneously in different bins. In one embodiment, the histogram data that can be gathered are a number of elapsed clock cycles with a number of pending transactions in defined range bins, and a number of transactions with cycles of latency in defined range bins.

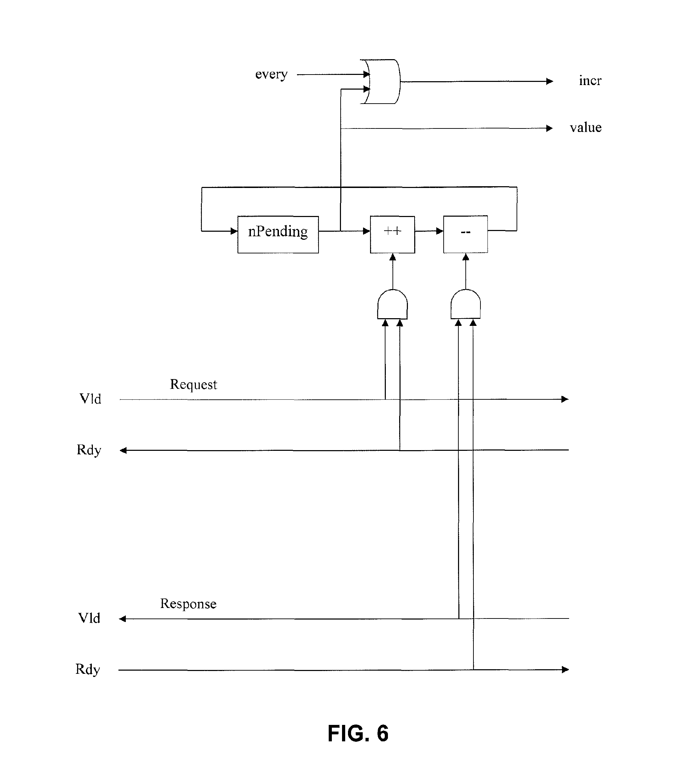

Histogram data for number of elapsed clock cycles with a number of pending transactions in defined bins having a range with a minimum and maximum are gathered on a clock cycle by incrementing histogram bin counters. In one embodiment, shown in FIG. 6, the incrementing of histogram bin counters is performed either on cycles with at least one pending transaction or on every cycle. The decision is controlled by an input signal named, in this example, 'every' that is connected to an OR gate. A register that stores an enumeration of the number of pending transactions has its value incremented by the ++ module whenever a request is initiated; that is detected through an AND gate on the Request Vld and Rdy signals both being asserted. The value of the signal nPending is decremented by the -- module whenever a transaction is responded; that is detected through an AND gate on the Response Vld and Rdy signals.

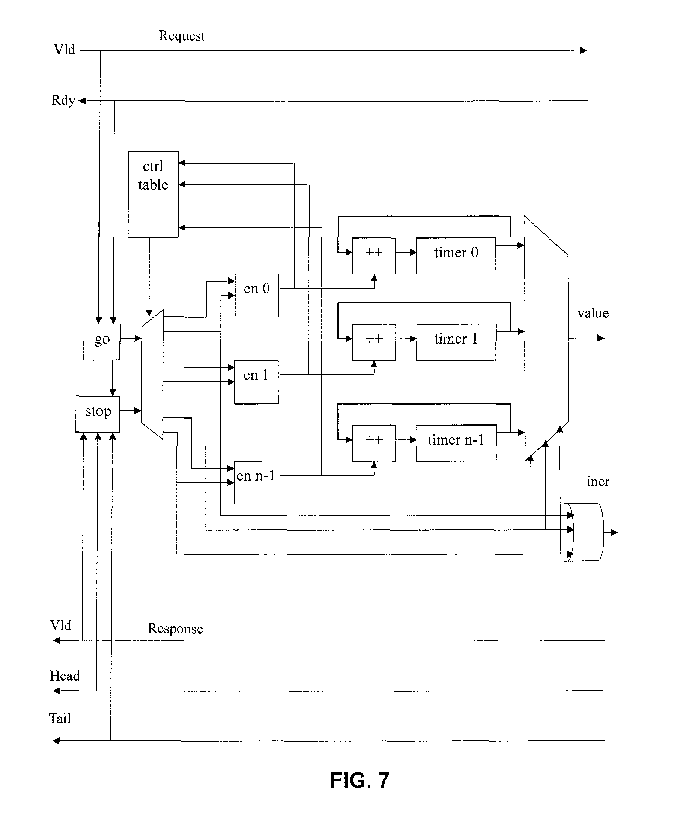

Histogram data for number of transactions with cycles of latency in defined bins of min/max range are gathered on the completion of latency periods by incrementing histogram bin counters. In one embodiment, shown in FIG. 7, a latency timer is initialized on a pulse from a go module and the signal to increment a histogram bin occurs on a pulse from a stop module. To measure the latency from when a request is made until it is granted by the NoC the request Vld signal triggers go and the request Rdy signal triggers stop. To measure latency from when a request is granted until when a response is presented the Request Vld and Rdy signal asserted together trigger go and the response Vld and Head signals asserted together trigger stop. To measure latency from the beginning of a request until the end of a response the request Vld and Rdy signal asserted together trigger go and the response Vld and Tail signals asserted together trigger stop.

In the embodiment shown in FIG. 7 a control table monitors which timers are in use, monitoring the latency of pending transactions. When a go pulse is received the ctrl table routes it to one of n enable modules, each corresponding to one of n timers. The timer is incremented (++) on every cycle. When a stop pulse is received the ctrl table routes it to a multiplexer (mux) that drives the value signal from the selected timer. A bin counter increment signal is derived from the logical or gate of the stop signal for each timer.

To reduce the amount of hardware in a NoC, especially the number of timers, one embodiment shares timers between more than one initiator NIU. This can be implemented with a crossbar switch that connects the Vld, Rdy, Head, and Tail control signals of the request and response paths of different initiators. While each initiator NIU can complete no more than one transaction per cycle, multiple initiator NIUs can complete multiple transactions per cycle. To allow multiple transaction completion, timers can be arranged in banks. Each bank can have one value and an incr output signal. A reverse crossbar switch can connect the value and incr signals to threshold bin counters. Timer banks can be arranged in groups of four timers. This configuration provides a good balance between the number of crossbar switch ports and the ability to allocate an optimal number of timers to NIUs.

In one embodiment the crossbar switch control that allows the allocation of banks to different NIUs is software programmable. The reverse crossbar switch control that allows the allocation of bin counters to banks can also be software programmable.

Note that the number of timers allocated to an initiator NIU may be less than the total number of pending transactions. In one embodiment, when such a configuration is programmed, then at the start of a transaction when no timers are available the transaction is disregarded by the probe and a software accessible flag is set to indicate that a transaction was disregarded.

In one embodiment, a programmable filter is applied to the incr output of the module that gathers an enumeration of the number of pending transactions. This allows software to control criteria of which cycles will increment pending bins. In the embodiment shown, the criteria are every cycle and cycles in which the number of pending transactions is greater than zero.

In one embodiment, a software programmable filter is applied to the transactions to be observed. Transactions not meeting filter criteria can be disregarded. Filter criteria can include but are not limited to transaction sideband signals, target identifier, address bits, opcode, security bits, burst size, and ID.

In one embodiment, log2 of the number of cycles for pending transactions can exceed the number of bits in the timer. A time scaling module can be implemented. The scaling module causes the timer to increment only once in a cycle time window.

When the latency probe logic receives transaction event information from initiator NIUs in more than one domain, the probe can be in the fastest of all connected clock domains to ensure that its sampling frequency is greater than the frequency of received transaction signaling so that no transactions are missed. In one embodiment, a clock domain adapter is implemented between initiator NIUs and the probe.

In one embodiment, a timer saturates at its maximum value. In one embodiment, a bin counter can overflow. A software resettable status flag indicates overflow for each bin. When counters overflow they can set their overflow flag and saturate their count value.

In one embodiment the probe comprises clock gating. Clocks can be disabled to flip-flops on transaction timers and enumerators of pending transactions when not in use. A programmable configuration register can cause the disconnection of power to the rest of the probe and another configuration register can disable the clock signal globally to the rest of the probe. These configurations allow power savings during operation, under software control, when statistics gathering is not necessary.

A number of implementations have been described. Nevertheless, it will be understood that various modifications may be made. For example, many of the examples presented in this document were presented in the context of an ebook. The systems and techniques presented herein are also applicable to other electronic text such as electronic newspaper, electronic magazine, electronic documents etc. Elements of one or more implementations may be combined, deleted, modified, or supplemented to form further implementations. As yet another example, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other implementations are within the scope of the following claims.

In the following, further examples are described to facilitate the understanding of the invention:
1. A method of collecting data, in the hardware logic of a network on chip (NoC), for a histogram of a number of pending transactions comprising:
   incrementing a pending transaction value when a transaction is requested;
   decrementing the pending transaction value when a transaction receives a response; and
   at a determined clock cycle, incrementing a first bin counter corresponding to the pending transaction value.
2. The method of example 1 in which the determined clock cycle is a clock cycle during which at least one transaction is pending.
3. The method of example 1 further comprising: programming which of the first bin counter and a second bin counter corresponds to the pending transaction value.
4. A method of collecting data, in the hardware logic of a network on chip (NoC), for a histogram of transaction latency comprising:
   initializing a first running timer at the beginning of a transaction; and
   at the end of the transaction, incrementing a first bin counter corresponding to a time of the first running timer.
5. The method of example 4 wherein the beginning of the transaction is when the NoC receives a request.
6. The method of example 4 wherein the beginning of the transaction is when the NoC accepts a request.
7. The method of example 4 wherein the end of a transaction is when the NoC offers a response.
8. The method of example 4 wherein the end of a transaction is when the NoC completes a response.
9. The method of example 4 wherein the end of a transaction is when the NoC accepts a request.
10. The method of example 4 further comprising: acting on the transaction only if the transaction meets at least one filter criterion.
11. The method of example 10 further comprising: programming at least one filter criterion.
12. The method of example 4 further comprising: programming which of the first bin counter and a second bin counter corresponds to the time.
13. The method of example 4 further comprising the step of selecting between the first running timer and a second running timer.
14. The method of example 13 further comprising the step of selecting between a first bank of timers and a second bank of timers.
15. An apparatus in the hardware logic of a network on chip (NoC) for collecting data for a histogram comprising:
   an enumeration register that stores a value representing a number of pending transactions;
   logic to increment or decrement the enumeration register;
   at least two bin count registers;
   logic to compare the value of the enumeration register to at least one threshold; and
   logic to increment a selected bin count register.
16. The apparatus of example 15 further comprising logic to indicate when to increment the selected bin counter.
17. The apparatus of example 16 wherein the at least one threshold is programmable.
18. An apparatus in the hardware logic of a network on chip (NoC) for collecting data for a histogram comprising:
   at least one timer that stores a value representing a number of cycles of a pending transaction;
   logic to increment the timer;
   logic to initialize the timer when a go is signaled
   at least two bin count registers;
   logic to compare the value of the timer to at least one threshold value; and
   logic to increment at least one bin count register when a stop is signaled.
19. The apparatus of example 18 wherein the timer is dynamically allocated at the start of the transaction to that transaction within a set of a plurality of timers
20. The apparatus of example 18 wherein go is signaled when the NoC receives a transaction request.
21. The apparatus of example 18 wherein go is signaled when the NoC grants a transaction request.
22. The apparatus of example 18 wherein stop is signaled when the NoC offers a response.
23. The apparatus of example 18 wherein stop is signaled when the NoC completes a response.
24. The apparatus of example 18 wherein stop is signaled when the NoC grants a transaction request.
25. The apparatus of example 18 further comprising a filter for transactions that meet at least one criterion.
26. The apparatus of example 25 wherein the at least one criterion is programmable.
27. The apparatus of example 18 wherein the threshold value is programmable.
28. The apparatus of example 18 comprising a multiplicity of timer banks wherein each bank can simultaneously provide a timer value to compare to the at least one threshold value.
29. The apparatus of example 28 wherein a first bank is connected to a first transaction interface of the NoC and a second bank is connected to a second transaction interface of the NoC.
30. The apparatus of example 29 further comprising logic to switch the connection of transaction interfaces to banks.
31. The apparatus of example 15 or example 18 further comprising clock domain crossing logic between at least one network interface unit (NIU) and the histogram bin counters.
32. The apparatus of example 15 or example 18 further comprising a transaction filter.

## Claims

1. A method of collecting data, in the hardware logic of a network on chip, NoC, for a histogram of transaction latency comprising:
initializing a first running timer at the beginning of a transaction; and
at the end of the transaction, incrementing a first bin counter corresponding to a time of the first running timer.

2. The method of claim 1, wherein the beginning of the transaction is when the NoC receives a request.

3. The method of claim 1, wherein the beginning of the transaction is when the NoC accepts a request.

4. The method of claim 1, wherein the end of a transaction is when the NoC offers a response.

5. The method of claim 1, wherein the end of a transaction is when the NoC completes a response.

6. The method of claim 1, wherein the end of a transaction is when the NoC accepts a request.

7. The method of claim 1, further comprising, acting on the transaction only if the transaction meets at least one filter criterion.

8. An apparatus in the hardware logic of a network on chip, NoC, for collecting data for a histogram comprising:
at least one timer that stores a value representing a number of cycles of a pending transaction;
logic to increment the timer;
logic to initialize the timer when a go is signaled;
at least two bin count registers;
logic to compare the value of the timer to at least one threshold value;
and
logic to increment at least one bin count register when a stop is signaled.

9. The apparatus of claim 8, wherein the timer is dynamically allocated at the start of the transaction to that transaction within a set of a plurality of timers.

10. The apparatus of claim 8, wherein go is signaled when the NoC receives a transaction request.

11. The apparatus of claim 8, wherein go is signaled when the NoC grants a transaction request.

12. The apparatus of claim 8, wherein stop is signaled when the NoC offers a response.

13. The apparatus of claim 8, wherein stop is signaled when the NoC completes a response.

14. The apparatus of claim 8, wherein stop is signaled when the NoC grants a transaction request.

15. The apparatus of claim 8, further comprising a filter for transactions that meet at least one criterion.

16. The apparatus of claim 15, wherein the at least one criterion is programmable.

17. The apparatus of claim 8, wherein the threshold value is programmable.
